# EUROPÄISCHE PATENTSCHRIFT

(11) **EP 1 659 249 B1**
(45) Veröffentlichungstag und Bekanntmachung des Hinweises auf die Patenterteilung: **13.06.2012**
(21) Anmeldenummer: 05024310.4
(22) Anmeldetag: 08.11.2005
(51) Int. Cl.: E05F 5/02

(54) **Elastischer Anschlagpuffer, insbesondere für Verschlussdeckel**
Elastic stop buffer, in particular for closure lids
Butée élastique, en particulier pour couvercle de fermeture

(30) Priorität: 18.11.2004 DE 102004055638
(43) Veröffentlichungstag der Anmeldung: 24.05.2006
(73) Patentinhaber: EJOT GmbH & Co. KG, 57334 Bad Laasphe (DE)
(72) Erfinder: Pinzl, Wilfried, Dr., 99897 Tambach-Dietharz (DE); Rausch, Uwe, 99897 Tambach-Dietharz (DE); Christ, Eberhard, Dr., 99897 Tambach-Dietharz (DE)
(74) Vertreter: Bardehle, Heinz

(56) Entgegenhaltungen:
- EP-A- 1 300 290

## Beschreibung

Die Erfindung bezieht sich auf einen elastischen Anschlagpuffer, insbesondere für Verschlussdeckel, mit einem Pufferschaft und einem Pufferkopf, der axial verschiebbar über den Pufferschaft gestülpt ist, wobei zwischen Pufferschaft und Pufferkopf in dessen Innenraum eine Pufferfeder, die den Pufferkopf vom Pufferschaft wegdrückt, angeordnet und der Pufferkopf mittels Rastnasen von dem Pufferschaft gegen Abziehen gehalten ist.

Ein derartiger Anschlagpuffer ist in der europäischen Patentanmeldung 1 300 290 A2 offenbart. Die beiden Bestandteile dieses Anschlagpuffers, sein Pufferschaft und sein Pufferkopf, werden vor dem Einsetzen des Anschlagpuffers mit seinem Pufferschaft in irgendein Bauteil dadurch zusammengesteckt, dass der Pufferkopf über das betreffende Ende des Pufferschaftes gestülpt wird, wobei mittels Rastnasen eine gesicherte Verbindung zwischen den beiden Bestandteilen entsteht. Damit der Anschlagpuffer mittels seines mit Gewinde versehenen Pufferschaftes an dem Bauteil durch Einschrauben befestigt werden kann, besitzt der Pufferschaft an seinem von dem Pufferkopf umfassten Ende eine Werkzeugaufnahme, z.B. einen Innen-Sechskant, der dann dazu dient, ein entsprechend geformtes Werkzeug aufzunehmen, durch das der Pufferschaft zusammen mit dem Pufferkopf an de Bauteil befestigt wird. Damit für diesen Befestigungsvorgang auch bei aufgestülptem Pufferkopf die Werkzeugaufnahme zugänglich bleibt, besitzt der Pufferkopf auf seiner dem betreffenden Ende des Pufferschaftes zugewandten Seite eine so große Öffnung, dass durch diese das Eindrehwerkzeug, das in den Innen-Sechskant eingreift, bequem eingeführt werden kann.

Eine ähnliche Gestaltung eines elastischen Anschlagpuffers zeigt die deutsche Patentschrift 195 20 492 C2, bei der im Gegensatz zu einer Schraubenfeder eine Druckkammer die gewünschte Elastizität vermittelt, die mit einem aus dem Pufferkopf herausragenden Kolben im Zusammenwirken mit der Druckkammer die in der Druckkammer enthaltene Luft mehr oder minder bei Druck auf den Pufferkopf diesem eine elastische Abstützung vermittelt. Weiterhin zeigt die genannte Druckschrift am Pufferschaft Axialnuten, in die mit dem Pufferkopf zusammenhängende Radialvorsprünge eingreifen, womit dem Pufferkopf gegenüber dem Pufferschaft die notwendige Axialführung gegeben ist. Die Befestigung des Pufferschaftes an einem Bauteil erfolgt durch am Pufferschaft angebrachte Schnapphaken, die hinter ein Bauteil greifen, an dem der Anschlagpuffer anzubringen ist.

Bei dem eingangs erwähnten Anschlagpuffer muss mittels eines Verdrehwerkzeuges durch den Pufferkopf hindurch gegriffen werden, um auf den Pufferschaft einzuwirken, wenn es sich bei diesem um einen solchen mit einem Gewindeschaft handelt. Das Durchgangsloch im Pufferkopf macht den Innenraum unter dem Pufferkopf mit der Pufferfeder von außen her zugänglich, so dass vor allem beim Auftreffen eines Gegenstandes auf den Pufferkopf Schmutz und Fremdkörper in den Innenraum eindringen können, die dann in der Lage sind, die richtige Funktion des Anschlagpuffers bei der Relativbewegung von Pufferkopf zu Pufferschaft zu beeinträchtigen. Dabei ist dieser Innenraum schwer zugänglich, so dass eine Reinigung dieses Innenraums praktisch unmöglich ist.

Der Erfindung liegt die Aufgabe zugrunde, den eingangs erläuterten Anschlagpuffer so zu gestalten, dass der unter dem Pufferkopf befindliche Innenraum praktisch unzugänglich ist und bleibt, dabei aber die axiale Beweglichkeit des Pufferkopfes gegenüber dem Pufferschaft nicht beeinträchtigt wird und der gesamte Anschlagpuffer über den Pufferkopf in eine Bohrung eines Bauteils eingesetzt, insbesondere eingeschraubt werden kann. Erfindungsgemäß geschieht dies dadurch, dass der Pufferkopf innerhalb eines von den Rastnasen umfassten Innenraumes mit einem axialen Vorsprung derart versehen ist, dass Verdrehsicherungselemente am Pufferschaft mit dem Pufferkopf im Eingriff stehen oder bringbar sind, wodurch der gesamte Anschlagpuffer über den Pufferkopf in eine Bohrung eines Bauteils eingesetzt, insbesondere eingeschraubt werden kann.

Aufgrund dieser Gestaltung wir für den Pufferkopf kein Durchgangsloch benötigt, so dass dieser den Innenraum des Anschlagspuffers weitgehend gegen Verschmutzungen abschirmt. Bei Verdrehung des Pufferkopfes nimmt dieser aufgrund der bewirkten Verdrehsicherung den Pufferschaft mit, wodurch dieser in irgendein Bauteil eingeschraubt werden kann. Eine direkte Einwirkung auf den Pufferschaft von außen her im Sinne einer Drehbewegung ist dabei nicht erforderlich, da bei Verdrehen des Pufferkopfes die am Pufferschaft vorgesehenen Verdrehsicherungselemente als Verdrehsicherung zwischen Pufferkopf und Pufferschaft wirken und andererseits bei Verdrehen des Pufferkopfes den Pufferschaft entsprechend mitnehmen.

Vorteilhaft wird der in dem Pufferkopf untergebrachte axiale Vorsprung als koaxiales Ringteil ausgebildet, das in eine koaxiale Hülse am Pufferschaft eingreift. Eine weitere Möglichkeit der Verrasterung von Pufferkopf und Pufferschaft ergibt sich durch eine Gestaltung, gemäß der der axiale Vorsprung als zentraler viereckiger Vorsprung in ein als seitlich offener Kasten geformtes, den Pufferschaft bildendes Blechformstück eingreift, das mit Haltewänden und quer verlaufenden Sicken in axiale Hohlräume im Pufferkopf eingreift.

Zur axialen Verrasterung von Pufferkopf und Pufferschaft können Ringteil und Hülse mit die Rastnasen bildenden, gegeneinander gerichteten Ringschultern versehen sein.

Zur Befestigung des Anschlagpuffers mittels des Pufferschaftes lässt sich vor allem ein Gewinde verwenden, wozu der Anschlagpuffer derart gestaltet wird, dass der Pufferschaft in einer Schraube endet. Es ist aber auch möglich, den Pufferschaft mit Spreizfedern und Rastklinken zu versehen, so dass der Anschlagpuffer in eine entsprechende Ausnehmung in einem Bauteil einfach eingedrückt und damit eingerastet werden kann.

Für die Pufferfeder gibt es mehrere Möglichkeiten der Gestaltung. Einerseits ist es möglich, die Pufferfeder als Schraubenfeder auszubilden. Andererseits kann man als Pufferfeder auch ein elastisches Kunststoffteil verwenden.

Im Falle der Verwendung eines Blechformstücks als Pufferschaft kann dieses auch dazu verwendet werden, als Pufferfeder zu wirken, wozu das Blechformstück mit schrägen Federarmen versehen ist, die mit Schrägflächen an dem Vorsprung zusammenwirken. Unter der Wirkung der schrägen Federarme, die auf die Schrägflächen an dem Vorsprung drücken, wird dafür gesorgt, dass mittels des Blechformstücks der Pufferkopf vom Pufferschaft weggedrückt wird, was wegen der Schrägflächen eine axialen Elastizität bewirkt.

In den Figuren sind Ausführungsbeispiele der Erfindung dargestellt. Es zeigen:
- Figur 1: den Anschlagpuffer in Seitensicht mit einem Gewindepuffer- schaft;
- Figur 2: den gleichen Anschlagpuffer im Schnitt längs der Linie II-II aus Figur 1 mit einer Schraubenfeder als Pufferfeder;
- Figur 3: einen Schnitt längs der Linie III-III aus Figur 2;
- Figur 4: eine Seitenansicht einer weiteren Gestaltung des Anschlagpuf- fers;
- Figur 5: einen Schnitt des gleichen Anschlagpuffers längs der Linie V- V aus Figur 4 mit einem durch ein Blechformstück gebildeten Pufferschaft;
- Figur 6: den Anschlagpuffer gemäß Figur 4 in einer Sicht auf den Puf- ferschaft;
- Figur 7: einen Anschlagpuffer in Seitensicht mit Spreizfedern zur Be- festigung an einem Bauteil;
- Figur 8: den gleichen Anschlagpuffer im Schnitt längs der Schnittlinie VIII-VIII aus Figur 7 mit einer durch ein elastisches Kunst- stoffteil gebildeten Pufferfeder;
- Figur 9: den Anschlagpuffer gemäß Figur 8 mit teilweise zusammenge- drücktem Kunststoffteil.

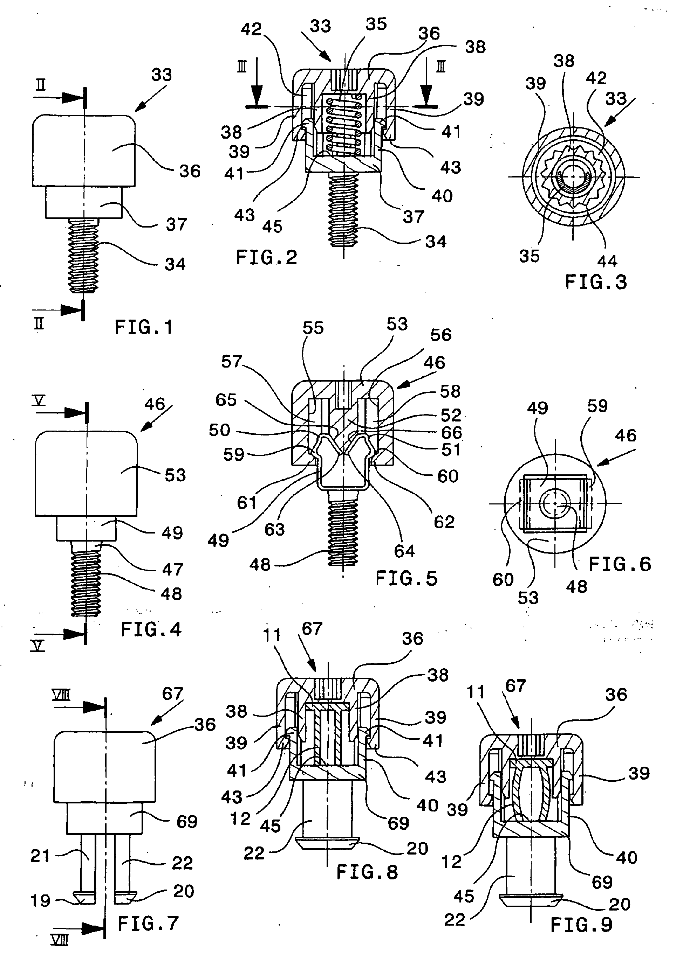

Bei dem in den Figuren 1 bis 3 dargestellten Anschlagpuffer 33 handelt es sich um einen solchen, der mit einem Gewindeschaft 34 und einer Schraubenfeder 35 als Pufferfeder ausgestattet ist. Die Verasterung von Pufferkopf 36 und Pufferschaft 37 erfolgt hier dadurch, dass der Pufferkopf 36 in die Ringwandung 39 übergeht, in der nach innen hin der freie Ringraum 42 frei bleibt. In diesen Ringraum 42 ragt die koaxiale Hülse 40 vom Pufferschaft 37 hinein, die mit ihren als Ringschultern 41 ausgebildeten Rastnasen sich an den Ringschultern 43 anhängt und damit die Verbindung zwischen Pufferkopf 36 und Pufferschaft 37 herstellt. Um dabei eine Verdrehsicherung zu erzielen, weist das koaxiale Ringteil 38 eine nach außen gerichtete Verzahnung 44 auf (siehe Figur 3), die in eine entsprechende Gegenverzahnung auf der Innenseite der koaxiale Hülse 40 eingreift. Die Pufferfeder 35 drückt einerseits von innen her gegen den Pufferkopf 36 und andererseits gegen den Boden 45 der koaxialen Hülse 37, die mit dem Boden 45 den Innenraum des Anschlagpuffers 33 nach außen hin vollständig abschließt. In den Innenraum kann somit keinerlei Schmutz oder Staub eindringen.

Der in den Figuren 4 bis 6 (Figur 6 Ansicht auf Gewindeteil 48, Figur 5 Schnitt gemäß Linie V-V aus Figur 4) dargestellte Anschlagpuffer 46 weist einen Pufferschaft 47 mit dem Gewindeteil 48 und dem Blechformstück 49 auf, das nach Art eines seitlich offenen Kastens mit seinen Haltewänden 50 und 51 den zentralen viereckigen Vorsprung 52 einfasst, der als Bestandteil des Pufferkopfes 53 in den Innenraum des Pufferkopfes 53 hineinragt. Die Außenwand des Pufferkopfes 53 ist nach Art eines Hohlzylinders ausgebildet, der allerdings in seinem Inneren die beiden Flächen 55 und 56 aufweist, die sich parallel zu den Haltewänden 50 und 51 des Blechformteils 49 gegenüber stehen. Damit enthält der Pufferkopf 53 zwei Hohlräume 57 und 58, die sich mit parallelen Wänden quer durch den Pufferkopf 53 erstrecken und die Haltewände 50 und 51 aufnehmen. Die Haltewände 50 und 51 weisen jeweils quer verlaufende Sicken 59, 60 auf, die sich gegen ein ebenfalls quer verlaufendes Widerlager 61 und 62 abstützen und damit nach eingesetztem Pufferschaft ein Abfallen des Pufferschaftes 47 von dem Pufferkopf 53 verhindern. Dabei sorgt die parallele Erstreckung der Innenräume 57 und 58 mit den quer und gradlinig verlaufenden Sicken 59, 60 dafür, dass unter Berücksichtigung des rechteckigen Querschnittes des Vorsprungs 52 der eingesetzte Pufferschaft 47 sich gegenüber dem Pufferkopf 53 nicht verdrehen kann.

Zusätzlich wird das Blechformstück 49 dazu benutzt, als Pufferfeder zu wirken, wozu aus dem Blechformstück 49 die beiden Federarme 63 und 64 herausgedrückt sind, die sich gegen die entsprechenden Schrägen 65, 66 an dem Vorsprung 52 anlegen und aufgrund ihrer Schräglage und Federeigenschaften den Vorsprung 52 und damit den Pufferkopf 53 vom Pufferschaft 47 wegdrücken. Die beiden Federarme 63, 64 wirken dabei in gleicher Weise wie die zu den vorstehend beschriebenen Ausführungsbeispielen angegebenen Schraubenfedern bzw. das elastische Kunststoffteil 11.

Der in den Figuren 7 bis 9 dargestellte Anschlagpuffer 67 (Figur 8 ist Schnitt gemäß Linie VIII-VIII aus Figur 5) weist die Rastklinken 19, 20 auf, um den Anschlagpuffer an einem nicht dargestellten Bauteil zu befestigen, wozu der Anschlagpuffer 67 in eine entsprechende Ausnehmung eingedrückt wird, wobei sich die Rastklinken 19 und 20 wegen ihrer Anbringung an den Spreizfedern 21 und 22 nach innen zusammendrücken und nach außen zurück federn.

Gemäß Figur 8 ist dem Innenraum des Ringteils 38 am Pufferkopf 36 das elastische Kunststoffteil 11 eingesetzt, auf das der Pufferkopf 36 gedrückt werden kann, wodurch das elastische Kunststoffteil 11 mit seinem Zylinderteil 12 zusammengedrückt wird, das aufgrund seiner Elastizität den Pufferkopf 36 vom Pufferschaft 69 wegdrückt. Die Verdrehsicherung lässt sich gemäß der Darstellung in Figur 3 herbeiführen.

Die elastische Verformung des Zylinderteils 12 ist in der Figur 9 dargestellt, die den Anschlagspuffer 67 in einer gegenüber der Lage gemäß Figur 8 zeugt, in der der Pufferkopf 36 in Richtung auf den Pufferschaft 69 verschoben ist. Bei dieser Verschiebung durch Druck auf den Pufferkopf 36 entfernen sich die Ringschultern 41 von dem nach innen weisenden Radialvorsprung 43, wobei gleichzeitig sich das Zylinderteil 12 nach außen wölbt und dabei mit entsprechender Federspannung gegen den Pufferkopf 36 drückt.

## Patentansprüche

1. Elastischer Anschlagpuffer (33, 46), insbesondere für Verschlussdeckel, mit einem Pufferschaft (37, 49) und einem Pufferkopf (36, 53), der axial verschiebbar über den Pufferschaft (37, 49) gestülpt ist, wobei zwischen Pufferschaft (37, 49) und Pufferkopf (36, 53) in dessen Innenraum eine Pufferfeder (35; 50, 51), die den Pufferkopf (36, 53) vom Pufferschaft (37, 49) wegdrückt, angeordnet und der Pufferkopf (36, 53) mittels Rastnasen (43, 61, 62) gegen Abziehen von dem Pufferschaft (37, 49) gehalten ist, **dadurch gekennzeichnet, dass** der Pufferkopf (36, 53) innerhalb eines von den Rastnasen (43; 61, 62) umfassten Innenraumes mit einem axialen Vorsprung (38, 52) derart versehen ist, dass Verdrehsicherungselemente (44; 50, 51; 59, 60) am Pufferschaft (37, 49) mit dem axialen Vorspung (38, 52) des Pufferkopfs (36, 53) im Eingriff stehen oder in Eingriff bringbar sind, wodurch der gesamte Anschlagpuffer (33, 46) über den Pufferkopf (36, 53) in eine Bohrung eines Bauteils eingesetzt, insbesondere eingeschraubt werden kann.

2. Anschlagpuffer nach Anspruch 1, **dadurch gekennzeichnet, dass** der axiale Vorsprung als koaxiales Ringteil (38) in eine koaxiale Hülse (40) am Pufferschaft (37) eingreift.

3. Anschlagpuffer nach Anspruch 1, **dadurch gekennzeichnet, dass** der axiale Vorsprung als zentraler viereckiger Vorsprung (52) in ein als seitlich offener Kasten geformtes, den Pufferschaft bildendes Blechformstück (49) eingreift, das mit Haltewänden (50, 51) und quer verlaufenden Sicken (59, 60) in axiale Hohlräume (57, 58) im Pufferkopf (53) eingreift.

4. Anschlagpuffer nach einem der Ansprüche 1 bis 3, **dadurch gekennzeichnet, dass** zur Verrasterung von Pufferkopf (36) und Pufferschaft (37) das Ringteil (38) und die Hülse (40) jeweils mit die Rastnasen bildenden gegeneinander gerichteten Ringschultern (41, 43) versehen sind.

5. Anschlagpuffer nach einem der Ansprüche 1 bis 4, **dadurch gekennzeichnet, dass** der Pufferschaft (37, 49) in einer Schraube (34, 48) endet.

6. Anschlagpuffer nach einem der Ansprüche 1 bis 4, **dadurch gekennzeichnet, dass** der Pufferschaft (37) mit Spreizfedern (21, 22) versehen ist, die in Rastklinken (19, 20) enden.

7. Anschlagpuffer nach einem der Ansprüche 1 bis 6, **dadurch gekennzeichnet, dass** die Pufferfeder als Schraubenfeder (35) ausgebildet ist.

8. Anschlagpuffer nach einem der Ansprüche 1 bis 6, **dadurch gekennzeichnet, dass** die Pufferfeder durch ein elastisches Kunststoffteil (11) gebildet ist.

9. Anschlagpuffer nach einem der Ansprüche 1 bis 6, **dadurch gekennzeichnet, dass** die Pufferfeder durch das Blechformstück (49) gebildet ist, das mit schrägen Federarmen (63, 64) versehen ist, die mit Schrägflächen (65, 66) am Vorsprung (52) zusammenwirken.

## Claims

1. Flexible stop buffer (33, 46), particularly for cover lids, with a buffer stem (37, 49) and a buffer head (36, 53), said buffer head (36, 53) being axially displaceable and being slipped over the buffer stem (37, 49), wherein disposed between buffer stem (37, 49) and buffer head (36, 53) in the interior space of the latter is a buffer spring (35; 50, 51), said buffer spring (35; 50, 51) pressing the buffer head (36, 53) away from the buffer stem (37, 49), and wherein the buffer head (36, 53) is secured by means of locking lugs (43, 61, 62) against being pulled off the buffer stem (37, 49), **characterized in that** the buffer head (36, 53) is provided, inside an interior space surrounded by the locking lugs (43; 61, 62), with an axial projection (38, 52) such that anti-rotation elements (44; 50, 51; 59, 60) on the buffer stem (37, 49) are in engagement or are adapted to be brought into engagement with the axial projection (38, 52) of the buffer head (36, 53), whereby to complete stop buffer (33, 46)may be inserted, in particular screwed into a bore of a construction element through the buffer head (36, 53).

2. Stop buffer according to claim 1, **characterized in that** the axial projection in the form of a coaxial annular part (38) engages a coaxial sleeve (40) on the buffer stem (37).

3. Stop buffer according to claim 1, **characterized in that** the axial projection in the form of a central rectangular projection (52) engages a specially shaped metal piece (49), said specially shaped metal piece (49) being in the form of a laterally open box and forming the buffer stem, wherein said specially shaped metal piece (49), with retaining walls (50, 51) and transversely extending beads (59, 60), engages axial hollow spaces (57, 58) in the buffer head (53).

4. Stop buffer according to claim 1 to 3, **characterized in that**, for the locking of buffer head (36) and buffer stem (37), the annular part (38) and the sleeve (40) are each provided with annular shoulders (41, 43), said annular shoulders (41, 43) forming the locking lugs and being directed against each other.

5. Stop buffer according to claim 1 to 4, **characterized in that** the buffer stem (37, 49) terminates in a screw (34, 48).

6. Stop buffer according to claim 1 to 4, **characterized in that** the buffer stem (37) is provided with expanding springs (21, 22), said expanding springs (21, 22) terminating in locking catches (19,20).

7. Stop buffer according to any claim 1 to 6, **characterized in that** the buffer spring is in the form of a helical spring (35).

8. Stop buffer according to claim 1 to 6, **characterized in that** the buffer spring is formed by a flexible plastic part (11).

9. Stop buffer according to claim 1 to 6, **characterized in that** the buffer spring is formed by the specially shaped metal piece (49), said specially shaped metal piece (49) being provided with diagonal spring arms (63, 64), said spring arms (63, 64) cooperating with inclined surfaces (65, 66) on the projection (52).

## Revendications

1. Butée élastique (33, 46) en particulier pour couvercle de fermeture, avec un tronc de butée (37, 49) et une tête de butée (36, 53) qui est plantée sur le tronc de butée (37, 49) de manière coulissante selon l'axe, sachant qu'entre le tronc de butée (37, 49) et la tête de butée (36, 53), à l'intérieur de laquelle un ressort de butée (35, 50, 51) qui repousse la tête de butée (36, 53) du tronc de butée (37, 49), est placé, et la tête de butée (36, 53) est tenue au moyen de dents d'arrêt (43, 61, 62) pour éviter le retrait du tronc de butée (37, 49), **caractérisée en ce que** la tête de butée (36, 53) à l'intérieur d'un espace interne entouré par les dents d'arrêt (43, 61, 62), est pourvu d'une avancée axiale (38, 52), de manière à ce que des éléments anti-rotation (44, 50, 51, 59, 60) sur le tronc de butée (37, 49) soient en prise ou puissent être en prise avec l'avancée axiale (38, 52) de la tête de butée (36, 53), permettant que l'ensemble de la butée (33, 46) puisse être insérée, plus particulièrement vissée par la tête de butée (36, 53) dans l'alésage d'une pièce de construction.

2. Butée selon revendication 1, **caractérisée en ce que** l'avancée axiale s'engrène en tant que pièce annulaire coaxiale (38) dans une douille coaxiale (40) sur le tronc de butée (37).

3. Butée selon revendication 1 **caractérisée en ce que** l'avancée axiale en tant qu'avancée centrale carrée (52) s'engrène en tant qu'encaissement ouvert latéralement dans une pièce profilée en tôle (49) formant le tronc de butée, qui s'engrène avec des parois d'arrêt (50, 51) et des moulures s'étendant transversalement (59, 60) dans des creux axiaux (57, 58) dans la tète de butée (53)

4. Butée selon l'une des revendications 1 à 3, **caractérisée en ce que** pour l'enclenchement de la tête de butée (36) et le tronc de butée (37), la pièce annulaire (38) et la douille (40) sont respectivement munies d'épaulements annulaires (41, 43) tournés face à face formant les dents d'arrêt.

5. Butée selon l'une des revendications 1 à 4, **caractérisée en ce que** le tronc de butée (37, 49) se termine en vis (34, 48).

6. Butée selon l'une des revendications 1 à 4, **caractérisée en ce que** le tronc de butée (37) est muni de ressorts écarteurs (21, 22) qui terminent en crans d'arrêt (19, 20).

7. Butée selon l'une des revendications 1 à 6, **caractérisée en ce que** le ressort de butée est formé en tant que ressort cylindrique (35).

8. Butée selon l'une des revendications 1 à 6, **caractérisée en ce que** le ressort de butée est formé par une pièce en plastique élastique (11).

9. Butée selon l'une des revendications 1 à 6, **caractérisée en ce que** le ressort de butée est formé par la pièce de profilé en tôle (49) qui est munie de bras à ressort en biais (63, 34) qui agissent conjointement avec des surfaces en biais (65, 66) sur l'avancée (52).
